# EUROPÄISCHE PATENTSCHRIFT

(11) **EP 2 619 872 B1**
(45) Veröffentlichungstag und Bekanntmachung des Hinweises auf die Patenterteilung: **25.05.2016**
(21) Anmeldenummer: 11754410.6
(22) Anmeldetag: 08.09.2011
(51) Int. Cl.: B60R 16/03, F02N 11/08, H02J 7/00

(54) **EINRICHTUNG ZUR STABILISIERUNG EINER VERSORGUNGSSPANNUNG IN EINEM KRAFTFAHRZEUG**
DEVICE FOR STABILIZING A SUPPLY VOLTAGE IN A MOTOR VEHICLE
DISPOSITIF POUR STABILISER UNE TENSION D'ALIMENTATION DANS UN VÉHICULE AUTOMOBILE

(30) Priorität: 22.09.2010 DE 102010046232
(43) Veröffentlichungstag der Anmeldung: 31.07.2013
(73) Patentinhaber: Auto-Kabel Management GmbH, 79688 Hausen i.W. (DE)
(72) Erfinder: SCHÖN, Jürgen, 70186 Stuttgart (DE); SCHULZ, Thomas, 72669 Unterensingen (DE); MÄCKEL, Rainer, 53639 Königswinter (DE)
(74) Vertreter: Cohausz & Florack
(86) Internationale Anmeldenummer: PCT/EP2011/065508
(87) Internationale Veröffentlichungsnummer: WO 2012/038258

(56) Entgegenhaltungen:
- DE-A1-102008 058 646
- US-A1- 2008 185 999
- US-A1- 2009 251 009

## Beschreibung

Die Erfindung betrifft eine Einrichtung zur Stabilisierung einer Versorgungsspannung in einem Kraftfahrzeug gemäß dem Oberbegriff des Anspruchs 1.

Danach weist eine derartige Einrichtung bzw. ein derartiges System eine Funktionskomponente des Kraftfahrzeuges auf, insbesondere in Form eines Starters, sowie eine Spannungsquelle, die zum Versorgen der Funktionskomponente mit der Versorgungsspannung mit der Funktionskomponente verbunden ist.

Die besagten Starter oder auch Anlasser dienen in Kraftfahrzeugen mit Brennkraftmaschinen zum Starten bzw. Anlassen des Kraftfahrzeuges, da derartige Antriebe bei Stillstand kein Drehmoment liefern und daher nicht selbst anlaufen. Deshalb übernimmt der Starter die Auslösung eines Ansaug- und Verdichtungstaktes der Brennkraftmaschine. Bei dem Starter kann es sich insbesondere um einen Elektromotor handeln.

Da in modernen Kraftfahrzeugen angestrebt wird, die Brennkraftmaschine nur dann zu betreiben, wenn das Kraftfahrzeug tatsächlich fortbewegt werden soll (sogenannte Start-Stopp-Funktion zur Reduktion des CO₂-Austoßes), ist es wichtig, in Kraftfahrzeug-Bordnetzen die Versorgungsspannung von Kurzzeithochlastverbrauchern, wie z. B. einem Starter, zu stabilisieren, da neben dem Starter weitere permanent laufende Stromsysteme wie Navigations-, Sicherheits- und Infotainmentsysteme vorhanden sind, die störungsfrei betrieben werden sollen. Ein anderes Beispiel für einen Kurzzeithochlastverbraucher ist das ESP.

Damit der Fahrer im Stopp/Start-Betrieb des Kraftfahrzeuges keine Einschränkungen hinnehmen muss, ist insbesondere für den Warmstart eine Bordnetzstützung sinnvoll.

Diese verhindert, dass ein Spannungseinbruch durch den Startstrom für den Fahrer erlebbar wird.

In dieser Hinsicht ist aus der DE 10 2006 061 064 A1 eine Einrichtung der eingangs genannten Art zur Kraftfahrzeugbordnetz-Stabilisierung bekannt, mit einem elektronischen Relais und einer DC/DC-Wandlerschaltung, wobei der Schaltkreis bei einem Spannungsabfall im Bordnetz unter die Nennspannung als Aufwärtswandler aktiv ist, der die Spannung eines Lastpfades des Bordnetzes durch Schalten des Relais mithilfe der Wandlerschaltung auf die Nennspannung stabilisiert, und der Schaltkreis bei einer Eingangsspannung, die größer oder gleich der Nennspannung ist, keine Wandlung durchführt.

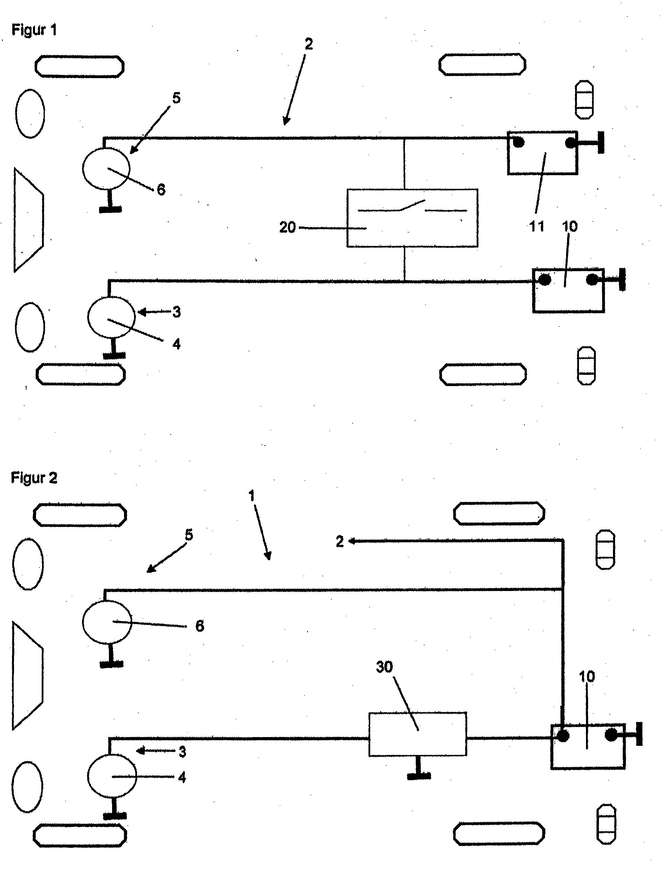

Weiterhin sind Systeme bekannt (vergleiche Fig. 1), die durch eine zweite Batterie, die mit dem Bordnetz verbunden ist, gestützt werden. Im Warmstartfall wird der Starterkreis über die Starterbatterie versorgt. Durch geeignete Schaltelemente wird das restliche Bordnetz, das dann über eine zweite Batterie versorgt wird, von dem Starterkreis getrennt.

So ist z. B. aus der WO 2008/014944 A1 ein System zur Spannungsversorgung von elektrischen Verbrauchern im Bordnetz eines Kraftfahrzeugs bekannt, bei dem das Bordnetz aus mindestens zwei Bordnetz-Bereichen besteht, wobei der erste Bordnetz-Bereich einen elektrischen Generator, eine Fahrzeugbatterie sowie ein oder mehrere erste elektrische Verbraucher und der zweite Bordnetz-Bereich einen Doppelschicht-Kondensator bzw. ein sog. Supercap, und ein oder mehrere zweite elektrische Verbraucher aufweist, zwischen den zwei Bordnetz-Bereichen eine Sperrvorrichtung vorgesehen ist, wie insbesondere eine Halbleiterdiode oder ein Leistungsschalter, die einen Stromfluss vom ersten Bordnetz-Bereich in den zweiten Bordnetz-Bereich ermöglicht und einen umgekehrten Stromfluss vom zweiten Bordnetz-Bereich in den ersten Bordnetz-Bereich weitgehend verhindert, wobei die Ausgangsspannung des elektrischen Generators angehoben und der Supercap aufgeladen wird, wenn ein erster Schwellenwert der elektrischen Spannung im zweiten Bordnetz-Bereich unterschritten wird.

Weiterhin gibt es Ansätze, Starter mit einem schaltbaren Vorwiderstand auszurüsten, um den Startstrom im Falle eines Warmstarts zu begrenzen. Hierzu ist ebenfalls eine entsprechende Schaltlogik für hohe Ströme notwendig.

Gattungsgemäße Bordnetze sind außerdem aus den Dokumenten DE 10 2008 058 646 A1 sowie US 2008/0185999 A1 bekannt.

Hiervon ausgehend liegt der vorliegenden Erfindung das Problem zugrunde, eine Einrichtung der eingangs genannten Art bereitzustellen, die möglichst einfach aufgebaut ist und daher mit geringen Herstellungskosten verbunden ist.

Dieses Problem wird durch eine Einrichtung mit den Merkmalen des Anspruchs 1 gelöst.

Danach ist vorgesehen, dass eine Widerstandskaskade zwischen die Funktionskomponente (Starter) und die Spannungsquelle geschaltet ist, wobei es sich bei der Spannungsquelle insbesondere um eine Kraftfahrzeugbatterie handelt, die eine Gleichspannung bereitstellt.

Die Widerstandskaskade ist zur Stabilisierung der Versorgungsspannung schaltbar ausgebildet, d. h., einzelne Widerstände der Widerstandskaskade können sukzessive zur Veränderung des Gesamtwiderstandes der Widerstandskaskade dazu geschaltet (oder abgeschaltet) werden.

Die Widerstandskaskade weist zumindest zwei zueinander parallel geschaltete Kaskadenzweige auf, wobei jeder Kaskadenzweig eine Reihenschaltung eines Schalters mit einem Widerstand aufweist. Vorzugsweise ist dabei ein Kaskadenzweig dazu vorgesehen, die Widerstände der anderen Kaskadenzweige zu überbrücken und weist daher lediglich einen Schalter auf, so dass im Falle eines Kaltstartes ein minimaler Gesamtwiderstand der Kaskade erzielt wird, wenn alle Schalter durchgeschaltet werden.

Zum Ansteuern der Widerstandskaskade ist eine Steuereinheit vorgesehen ist, die dazu ausgebildet ist, die einzelnen Schalter durchzuschalten bzw. zu öffnen, so dass jeweils ein Strom über den betreffenden Widerstand der Widerstandskaskade fließen bzw. nicht fließen kann.

Bei der Erfindung weist die Einrichtung eine Ladungspumpe auf. Derartige Ladungspumpen können mit einer Gleichspannung gespeist werden und dazu ausgebildet sein, eine höhere Gleichspannung als die Eingangsspannung mit gleicher Polarität zu erzeugen. Sie sind auch wesentlich kostengünstiger. Allerdings sind Ladungspumpen in der Stromtragfähigkeit begrenzt, was jedoch durch die spannungsstabilisierende Widerstandskaskade kompensiert werden kann, die als zusätzliche Strombegrenzung dienen kann.

Die Ladungspumpe wird durch die Versorgungsspannung der Spannungsquelle (Autobatterie) gespeist und erzeugt dabei eine Betriebsspannung für die Steuereinheit, die insbesondere oberhalb der Versorgungsspannung liegt, die durch die besagte Spannungsquelle bereitgestellt wird.

Die besagten Schalter können insbesondere als HL-Schalter ausgebildet sein, z. B. in Form von Transistoren. Die Gates der Transistoren werden dann durch die Steuereinheit angesteuert. Liegt eine entsprechende Gate-Sourcespannung an einem Transistor an, wird die entsprechende Drain-Source-Strecke vor dem jeweiligen Widerstand niederohmig, also durchgeschaltet. Es kann dann ein Strom über den betreffenden Widerstand fließen.

Da der Gesamtwiderstand 1/R_{ges} = 1/R₁ + 1/R₂ + 1/R₃ + ... der parallel geschalteten Widerstände R₁, R₂, R₃, ... der Widerstandskaskade durch Durchsteuern bzw. öffnen der entsprechenden Transistoren (Schalter) variierbar ist, kann somit auch die Versorgungsspannung zum Stabilisieren bei Lastspitzen durch entsprechendes Durchschalten/Öffnen der einzelnen Schalter temporär beeinflusst, insbesondere erhöht werden.

Bevorzugt ist die Steuereinheit dazu ausgebildet, die Kaskadenzweige jeweils zeitabhängig zuzuschalten und/oder herauszunehmen. So können z. B. einzelnen Kaskadenzweige zu bestimmten Zeiten nach einer Inbetriebnahme des Starters zugeschaltet/herausgenommen werden um die Versorgungsspannung entsprechend zu beeinflussen bzw. zu stabilisieren.

Die einzelnen Kaskadenzweige können natürlich auch in Abhängigkeit der zu stabilisierenden Versorgungsspannung geschaltet werden. Hierzu ist ein Spannungssensor vorgesehen, der die Versorgungsspannung erfasst und an die Steuereinheit übermittelt, die die Schalter (Transistoren) in Abhängigkeit von der momentanen Versorgungsspannung ansteuert (schließt und/oder öffnet).

Auf die vorstehend beschriebene Weise wird eine einfache, jedoch effiziente Stabilisierung einer Versorgungsspannung in einem Bordnetz eines Kraftfahrzeuges realisiert, wobei bei einer Zeitsteuerung eine nochmalige Kostenersparnis zu erwarten ist, da die Zeitsteuerung eine geringere Komplexität aufweist als die Regelung der Schalter (Transistoren) in Abhängigkeit von der zu stabilisierenden Versorgungsspannung der erfindungsgemäßen Einrichtung.

Weitere Merkmale und Vorteile der Erfindung sollen anhand der nachfolgenden Figurenbeschreibungen bzw. Figuren erläutert werden.

Dabei zeigen:
Fig. 1 eine aus dem Stand der Technik bekannte Einrichtung mit zwei Kraftfahrzeugbatterien (Spannungsquellen), die jeweils einem Teil des Bordnetzes zugeordnet sind und über eine Schalteinrichtung miteinander verbindbar sind;
Fig. 2 eine schematische Ansicht einer erfindungsgemäßen Einrichtung zum Stabilisieren einer Versorgungsspannung für eine Funktionskomponente (Starter) eines Kraftfahrzeuges, bei der eine Widerstandskaskade zwischen die Spannungsquelle und den Starter geschaltet ist;
Fig. 3 ein Schaltbild einer erfindungsgemäßen Einrichtung nach Art der Fig. 2 zum Stabilisieren einer Versorgungsspannung für eine Funktionskomponente (Starter) eines Kraftfahrzeuges; und
Fig. 4 die Versorgungsspannung über der Zeit im Falle eines begrenzten und eines nicht begrenzten Spannungseinbruchs der Versorgungsspannung.
Fig. 1 zeigt eine schematische Draufsicht auf ein System aus dem Stand der Technik, mit einer zusätzlichen Kraftfahrzeugbatterie 11 zum Unterstützen des Bordnetzes 2. Im Warmstartfall wird der Starterkreis 3 mit Starter 4 über die Starterbatterie 10 versorgt. Durch eine geeignete Schalteinrichtung 20 wird das restliche Bordnetz 5 mit Verbrauchern 6, das dann über die zweite Kraftfahrzeugbatterie 11 versorgt wird, von dem Starterkreis 3 getrennt.
Fig. 2 zeigt eine schematische Ansicht einer erfindungsgemäßen Einrichtung 1 zum Stabilisieren einer Versorgungsspannung U_{Batt} einer Spannungsquelle 10 (Kraftfahrzeugbatterie) für eine Funktionskomponente eines Kraftfahrzeuges in Form eines Starters 4, bei der zum Stabilisieren der Versorgungsspannung U_{Batt} bzw. zum Begrenzen eines Einbruchs der Versorgungsspannung U_{Batt} bei der Inbetriebnahme des Starters 4 eine Widerstandskaskade 30 zwischen die Spannungsquelle 10 und den Starter 4 geschaltet ist.

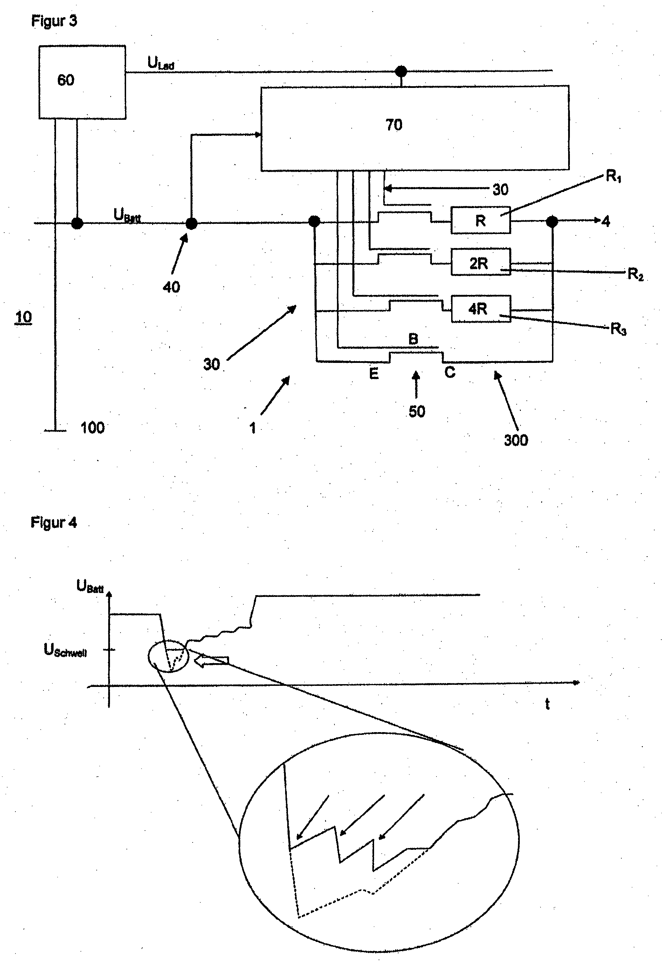

Fig. 3 zeigt ein Schaltbild einer erfindungsgemäßen Einrichtung 1 nach Art der Fig. 2. Danach weist die Einrichtung 1 eine Spannungsquelle 10 in Form einer Kraftfahrzeugbatterie auf, die eine Versorgungsspannung U_{Batt} bereitstellt, deren Einbruch bei der Inbetriebnahme des mit der Spannungsquelle 10 verbundenen Starters 4 gemäß Fig. 4 verhindert werden bzw. entgegengewirkt werden soll, um im Bordnetz eine hinreichende Versorgungsspannung U_{Batt} sicherzustellen. Hierzu ist zwischen die Spannungsquelle 10 und den Starter 4 eine Widerstandskaskade 30 geschaltet, die parallel zueinander geschaltete Widerständer R₁, R₂, R₃, ... aufweist, die die angegebenen Widerstandswerte relativ zueinander aufweisen können. Ein Zweig 300 (aus Gründen der Übersichtlichkeit ist nur ein Zweig exemplarisch bezeichnet) der Widerstandskaskade 30 weist keinen Widerstand auf, so dass beim Durchschalten aller Schalter 50 (aus Gründen der Übersichtlichkeit ist nur ein Schalter exemplarisch bezeichnet), die bei den anderen Zweigen 300 jeweils vor den Widerständen R₁, R2, R₃ angeordnet sind, ein minimaler Widerstand für einen Kaltstart des Starters 4 vorgesehen werden kann.

Zum Steuern der Schalter 50 dient eine Steuereinheit 70, die vorzugsweise durch eine Ladungspumpe 60 mit einer Betriebsspannung U_{Lad} versorgt wird.

Die Steuereinheit kann die einzelnen Widerstände R₁, R₂, R₃, ... in Abhängigkeit von der Zeit schalten, die seit einer Inbetriebnahme des Starters 4 vergangen ist oder in Abhängigkeit von der Versorgungsspannung U_{Batt} selbst. In diesem Fall ist ein Spannungssensor 40 vorgesehen, der die momentane Versorgungsspannung U_{Batt} an die Steuereinheit 70 weitergibt.

Bei den Schaltern 50 kann es sich insbesondere um Transistoren handeln. Dabei bildet die Drain-Source-Strecke EC den eigentlichen Schalter. Diese wird niederohmig (also leitend) wenn an der Gate-Söurce-Strecke des jeweiligen Transistors 50 eine hinreichende Spannung anliegt. Diese kann von der Steuereinheit 70 über entsprechende Leitungsverbindungen 30 an dem jeweiligen Gate bereitgestellt werden.

Der Spannungseinbruch in der Versorgungsspannung U_{Batt} beim Anlassen kann nun durch eine Widerstandserhöhung im Starterkreis, also durch entsprechendes Schalten der Widerstandskaskade 30 bewirkt werden. Der Gesamtwiderstand der R_{ges} der Widerstandskaskade 30 beträgt dabei 1/R_{ges} =1/R₁ + 1/R₂ + 1/R₃ und kann durch entsprechendes Schalten der Widerstände R₁, R₂, R₃ mittel der Schalter 50 variiert werden (bei den in der Fig. 3 angegebene Werten z. B. im Bereich von 4R/7 bis R).

Aufgrund des Ohmschen Gesetzes kann somit die Versorgungsspannung U_{Batt} abgefangen werden, wie es in Fig. 4 schematisch dargestellt ist. Dabei zeigt die gestrichelte Linie in dem Spannungs-Zeit-Diagramm einen Spannungseinbruch ohne Begrenzung beim Anlassen des Kraftfahrzeuges. Die durchgezogene Linie hingegen zeigt den zeitlichen Verlauf der Versorgungsspannung U_{Batt} mit Begrenzung des Spannungseinbruchs beim Anlassen, die durch die Widerstandserhöhung im Starterkreis über die Ansteuerung der Schalter 50 bewirkt wird. In der Vergrößerung sind die einzelnen Schaltvorgänge mit Pfeilen gekennzeichnet.

Es ist denkbar, dass die Begrenzung eines Versorgungsspannungseinbruchs einsetzt, sobald der Spannungssensor 40 eine Versorgungsspannung U_{Batt} unterhalb einer Schwellspannung U_{Schwell} detektiert.

## Patentansprüche

1. Einrichtung zur Stabilisierung einer Versorgungsspannung in einem Kraftfahrzeug, mit:
einem Starter (4) des Kraftfahrzeuges,
einer Kraftfahrzeugbatterie als Spannungsquelle (10), die zum Versorgen des Starter (4) mit der Versorgungsspannung (U_{Batt}) mit dem Starter (4) verbunden ist,
wobei die Spannungsquelle (10) zur Stabilisierung der Versorgungsspannung (U_{Batt}) über eine Widerstandskaskade (30) mit dem Starter (4) verbunden ist
**dadurch gekennzeichnet,**
**dass** die Widerstandskaskade (30) zumindest zwei zueinander parallel geschaltete Kaskadenzweige (300) aufweist, wobei jeder Kaskadenzweig eine Reihenschaltung eines Schalters (50) mit einem Widerstand (R₁, R₂, R₃) aufweist,
**dass** die Widerstandskaskade (30) zur Stabilisierung der Versorgungsspannung (U_{Batt}) schaltbar ist,
**dass** eine Steuereinheit (70) dazu ausgelegt ist, die Schalter (50) zu steuern, wobei eine Ladungspumpe (60) dazu ausgelegt ist, die Steuereinheit (70) mit einer
Betriebsspannung (U_{Lad}) zu verzorgen, die höher als die Versorgunsspannung (U_{Batt}) ist.

2. Einrichtung nach Anspruch 1 **dadurch gekennzeichnet, dass** ein Kaskadenzweig (300) vorgesehen ist, der zum Überbrücken der Widerstände (R₁, R₂, R₃) lediglich einen Schalter (50) aufweist.

3. Einrichtung nach Anspruch 1, **dadurch gekennzeichnet, dass** die Schalter (50) jeweils durch einen Transistor gebildet sind.

4. Einrichtung nach Anspruch 1, **dadurch gekennzeichnet, dass** die Steuereinheit (70) dazu ausgebildet ist, die Kaskadenzweige (300) jeweils zeitabhängig zu schalten.

5. Einrichtung nach Anspruch 1, **dadurch gekennzeichnet, dass** die Steuereinheit (70) dazu ausgebildet ist, die Kaskadenzweige (300) jeweils in Abhängigkeit der zu stabilisierenden Versorgungsspannung (U_{Batt}) zu schalten.

## Claims

1. Device for stabilising a supply voltage in a motor vehicle, having:
a starter (4) of the motor vehicle,
a vehicle battery as voltage supply (10), which is connected to the starter (4) to provide supply voltage (D_{Batt}) to the starter (4),
wherein the voltage supply (10) is connected to the starter (4) via a resistor cascade (30) in order to stabilise the supply voltage (U_{Batt}),
**characterized in that**
the resistor cascade (30) has at least two cascade branches (300) connected in parallel, wherein each cascade branch has a switch (50) connected in series with a resistor (R₁, R₂, R₃),
the resistor cascade (30) for stabilising the supply voltage (D_{Batt}) is switchable
a control unit (70) is arranged to control the switches (50), and
a charge pump (60) is arranged to provide the control unit (70) with an operating voltage (U_{Lad}), which is higher than the supply voltage (U_{Batt}).

2. Device according to claim 1, **characterised in that** a cascade branch (300) is provided, which in order to bypass the resistors (R₁, R₂, R₃) has only one switch (50).

3. Device according to claim 1, **characterised in that** the switches (50) take the form of a transistor, respectively.

4. Device according to claim 1, **characterised in that** the control unit (70) is designed to switch the cascade branches (300) in a time-dependent manner, respectively.

5. Device according to claim 1, **characterised in that** the control unit (70) is designed to switch the cascade branches (300) as a function of the supply voltage (U_{Batt}) to be stabilised, respectively.

## Revendications

1. Dispositif servant à la stabilisation d'une tension d'alimentation dans un véhicule automobile, ledit dispositif comprenant :
un démarreur (4) du véhicule automobile,
une batterie de véhicule automobile, batterie considérée comme source de tension (10) qui est reliée au démarreur (4) pour alimenter le démarreur (4) en tension d'alimentation (U_{Batt}),
où la source de tension (10) servant à la stabilisation de la tension d'alimentation (U_{Batt}) est reliée au démarreur (4) par une cascade de résistances (30),
**caractérisé**
**en ce que** la cascade de résistances (30) présente au moins deux circuits en cascade (300) montés en parallèle l'un par rapport à l'autre, où chaque circuit en cascade présente un montage en série d'un commutateur (50) ayant une résistance (R₁, R₂, R₃),
**en ce que** la cascade de résistances (30) servant à la stabilisation de la tension d'alimentation (U_{Batt}) est commutable,
**en ce qu'**une unité de commande (70) est conçue pour commander les commutateurs (50),
où une pompe de charge (60) est conçue pour alimenter l'unité de commande (70) en tension de fonctionnement (U_{Lad}) qui est plus élevée que la tension d'alimentation (U_{Batt}).

2. Dispositif selon la revendication 1, **caractérisé en ce qu'**il est prévu un circuit en cascade (300) qui présente un commutateur (50) servant seulement au pontage des résistances (R₁, R₂, R₃).

3. Dispositif selon la revendication 1, **caractérisé en ce que** les commutateurs (50) sont formés à chaque fois par un transistor.

4. Dispositif selon la revendication 1, **caractérisé en ce que** l'unité de commande (70) est conçue pour commuter les circuits en cascade (300) à chaque fois en fonction du temps.

5. Dispositif selon la revendication 1, **caractérisé en ce que** l'unité de commande (70) est conçue pour commuter les circuits en cascade (300) à chaque fois en fonction de la tension d'alimentation (U_{Batt}) à stabiliser.
